# EUROPEAN PATENT SPECIFICATION

(11) **EP 4 005 884 B1**
(45) Date of publication and mention of the grant of the patent: **16.08.2023**
(21) Application number: 20209724.2
(22) Date of filing: 25.11.2020
(51) Int. Cl.: B60T 17/08

(54) **BRAKE RELEASE MECHANISM FOR A SPRING BRAKE ACTUATOR AND CORRESPONDING SPRING BRAKE ACTUATOR**
BREMSLÖSUNGSMECHANISMUS FÜR EINEN FEDERSPEICHERBREMSZYLINDER UND ZUGEHÖRIGER FEDERSPEICHERBREMSZYLINDER
MÉCANISME DE DESSERRAGE DE FREIN POUR UN CYLINDRE DE FREIN À RESSORT ET CYLINDRE DE FREIN À RESSORT CORRESPONDANT

(43) Date of publication of application: 01.06.2022
(73) Proprietor: ZF CV Systems Europe BV, 1170 Brussels (BE)
(72) Inventor: FRANCZUK, Michal, 49-305 Brzeg (PL); ZBYLUT, Michal, 50-540 Wroclaw (PL)
(74) Representative: Rabe, Dirk-Heinrich

(56) References cited:
- EP-A1- 0 530 461
- EP-A1- 3 498 550
- US-A- 5 632 192
- US-A- 5 636 562
- US-A- 5 943 940

## Description

The invention relates to a brake release mechanism for a spring brake actuator, in particular a parking or emergency spring brake actuator for use in a commercial vehicle, said release mechanism comprising a brake release bolt having a threaded portion and an operating section for operating the release bolt when inserted into a spring brake actuator, a running nut engaging the threaded portion, said running nut being adapted to axially travel along the threaded portion in order to move a spring brake actuator piston against a force of an actuator power spring, and an indicator device comprising an indicator pin having a longitudinal axis and being at least partially accommodated in a receiving space of the release bolt, wherein the indicator device further comprises a pin actuator for moving the pin relative to the receiving space along its longitudinal axis.

Brake release mechanisms for spring brake actuators are generally known in the prior art. It is the aim of such release mechanisms to release a spring brake actuator for example in case of pneumatic system major functions. In known brake release mechanisms, the actuator is released by rotating a brake release bolt. Such release bolts comprise a threaded portion on which a running nut is engaged. The running nut is allowed to only move axially within a release bolt housing. Thus, rotating the release bolt leads to an axial movement of the running nut. The axial movement of the running nut is then utilized to move a spring brake actuator piston against a force of the actuator power spring to finally release the spring brake actuator and the wheel brake as such. It is furthermore known that brake release mechanisms comprise an indicator device having an indicator pin which is at least partially accommodated in a receiving space of the release bolt. The indicator pin is movable axially with respect to the release bolt receiving space. Based on the position of the indicator pin, an operator is able to determine whether the brake release mechanism is in a release state at which the spring brake actuator is released or in a driving state at which the release mechanism does not act upon the actuator piston and the power spring. US5632192A shows state of the art brake release bolt with an indicator head without substantially perpendicularly extending limiting elements.

Although these systems are well-proven, there is still room for improvement. One of the drawbacks of the state of the art systems is that they require a considerable amount of additional installation space contravening the market demand for compact spring brake actuators. Furthermore, it is common at state of the art brake release mechanisms to actuate the indicator pin with the help of a pin actuator that is attached to the indicator pin by means of a snap-fit connection. These connections, however, may suffer from durability issues.

Therefore, it was an object of the invention to provide a brake release mechanism for a spring brake actuator that overcomes at least some of the above-mentioned issues. In particular, it was an object of the invention to provide a brake release mechanism that offers means to indicate the state of the brake release mechanism while at the same time reducing the required installation space and increasing the durability of the indicator device. Additionally, it was an object of the invention to provide a brake release mechanism being easier to assemble and less costly to manufacture.

According to the invention, it is proposed that the pin actuator comprises a limiting element that is connected to the indicator pin, wherein the limiting element extends substantially perpendicularly to the longitudinal axis of the indicator pin, and in that a transverse guide opening is arranged in the release bolt, the transverse guide opening being configured to movably accommodate the limiting element and to define a motion distance of the indicator pin along the longitudinal axis, along which the limiting element moves inside the transverse guide opening.

The invention is based on the finding that such a pin actuator design offers a number of advantages. The proposed pin actuator design is compact regarding the required installation space. Moreover, it is easy to assemble and it has been found that the proposed solution is durable and requires less maintenance compared to state of the art solutions at which the indicator pin and the actuator are connected to one another by a snap-fit connection. By dimensioning the transverse guide opening as required, the motion distance of the indicator pin may be configured favourably. A further advantage of the proposed solution is that the brake release mechanism may be easily assembled. After having inserted the indicator pin into the release bolt receiving space, the limiting element may be guided through an opening in the indicator pin through the transverse guide opening. This improves the assembling of the brake release mechanism compared to known solutions.

In the context of the invention, the term "substantially perpendicular to the longitudinal axis" relates to an extension angle of in particular 60 degrees to 120 degrees from the longitudinal axis of the indicator pin.

According to another embodiment, the transverse guide opening is arranged perpendicular to the longitudinal axis of the indicator pin. In this way, the transverse guide opening is easy to manufacture and allows for a reliable guidance of the limiting element within the opening.

Preferably, the transverse guide opening extends entirely or partly, in particular halfway, through the release bolt. The design and geometry of the transverse guide opening may be selected according to the design of the limiting element. For example in case the limiting element extends through the indicator pin, it is beneficial to extend the transverse guide opening entirely through the release bolt. In case, however, the limiting element extends from only one side of the indicator pin, it might be sufficient to provide a transverse guide opening extending only halfway through the release bolt.

According to a preferred embodiment, the transverse guide opening is arranged at least partially at the threaded portion of the release bolt. This positioning has been found to be beneficial regarding the intended interaction with the running nut.

According to yet another preferred embodiment, the motion distance extends from 2 mm to 10 mm, preferably 4 mm to 6 mm. These ranges have been found to be a good trade-off between providing a compact pin indicator design on the one hand and to enable an operator to assess without any doubt if the spring brake actuator is mechanically released.

Preferably, the limiting element comprises or is configured as at least one of the following: pin, bolt, screw. The use of pins as limiting elements allows for an easy assembly and high durability. Depending on the proposed application, however, it has also been found to be beneficial to utilize bolts or screws as limiting elements.

According to a preferred embodiment, the limiting element comprises at least one of the following shapes: coiled, knurled, solid. Again, the shape of the limiting element may be selected depending on the intended type of application. Preferably, the limiting element comprises or is made of at least one of the following materials: metal, in particular steel, plastic, composite, in particular glass fiber reinforced plastic and/or carbon fiber reinforced plastic. Metal has been found to be beneficial for providing a durable limiting element. Also, limiting elements made of metal are widely available.

According to yet another embodiment, the opening comprises at least one of the following shapes: cylindrical, elliptical, rectangular. Depending on the shape used, the indicator pin may be limited regarding its axial movement as required while at the same time a certain degree of freedom regarding a rotation of the indicator pin can be allowed. Furthermore, a cylindrical opening is less costly to manufacture.

It is furthermore preferred that the indicator pin comprises or is made of at least one of the following materials: metal, in particular steel, plastic, composite, in particular glass fiber reinforced plastic and/or carbon fiber reinforced plastic. A pin made of plastic might be easier to manufacture and might be preferable for applications at which a light weight is intended. An indicator pin made of metal might provide a more solid and durable solution.

According to yet another embodiment, the spring brake release bolt comprises a spring element forcing the indicator pin in a first direction along the longitudinal axis towards the operating section. This design leads to a solution at which the indicator pin is forced out of the brake release bolt by the spring element, in case no other force acts upon the indicator pin.

Preferably, the limiting element is configured to directly or indirectly abut against the running nut for moving the indicator pin against a force of the spring element in a second direction, the second direction being opposite to the first direction. In other words, the running nut moves the indicator pin towards a position at which the indicator pin is not visible when the spring brake actuator is in the driving state.

Whenever the brake release mechanism is actuated at least partially, the indicator pin is moved out of the release bolt by the spring element thus enabling the operator to easily recognize whether the actuator is mechanically released.

According to yet another embodiment, a spacing means is arranged between the running nut and the limiting element for decoupling the limiting element from a torque applied by the running nut. This setup has been found to be beneficial to prevent the application of torque forces from the running nut to the limiting element avoiding a distortion of the limiting element.

Preferably, the spacing means comprises at least one of the following: plain washer, spring washer, bushing. The mentioned means have been found to be beneficial to durably decouple the running nut from the limiting element to avoid a transfer of torque from the running nut to the limiting element.

In a further aspect, the invention relates to a spring brake actuator, in particular a parking or emergency spring brake actuator for use in a commercial vehicle, said actuator comprising an actuator housing having an actuator housing base, a spring brake actuator piston located in said actuator housing for applying a braking force, and an actuator power spring located between the actuator housing base and the spring brake actuator piston, said actuator power spring being effective to push the spring brake actuator piston away from the base.

According to the invention, the brake release mechanism is a brake release mechanism according to the previously mentioned embodiments. The spring brake actuator takes advantage of the same benefits and preferred embodiments as the spring release mechanism according to the invention. In this regard, reference is made to the above explanations and their content is included herein.

The aspects of the disclosure may best be understood from the following detailed description taken in conjunction with the accompanying figures. The figures are schematic and simplified for clarity, and they just show details to improve the understanding of the claims while other details are left out. Throughout, the same reference numerals are used for identical or corresponding parts. The individual features of each aspect may each be combined with any or all features of other aspects.

These and other aspects, features and/or technical effects will be apparent from and elucidated with reference to the illustrations described hereafter, which show in:
- Fig. 1:: a preferred embodiment of a spring brake actuator according to the concept of the invention in a sectional view;
- Fig. 2:: a brake release mechanism for a spring brake actuator according to the preferred embodiment in a sectional view;
- Figs. 3-5:: an alternative embodiment of a brake release mechanism for a spring brake actuator in different views.

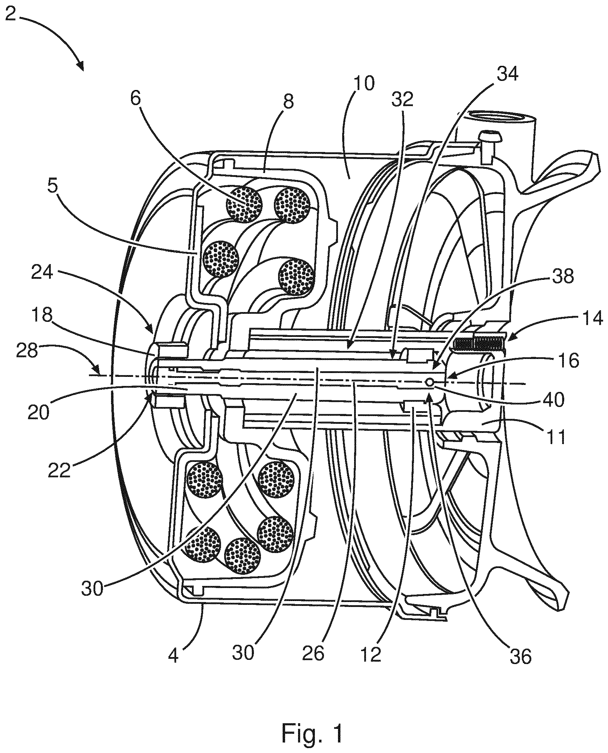

Fig. 1 shows a spring brake actuator 2 having an actuator housing 4. Inside the actuator housing 4, an actuator power spring 6 and a pressure chamber 10 are located. The power spring 6, which rests on the left side in Fig. 1 against an actuator housing base 5 and on the opposite side on a spring brake actuator piston 8, is in Fig. 1 held in a released position by positive pressure inside the pressure chamber 10.

The spring brake actuator piston 8 is adapted to transmit the inflicted force to a rod 11 which in turn transmits the applied power to the wheel brakes (not shown). Furthermore, the spring brake actuator 2 comprises a brake release mechanism 24. The brake release mechanism 24 is utilized to release the spring brake actuator 2. The brake release mechanism 24 comprises a brake release bolt 30 which is rotatably arranged within a release bolt housing 32. The brake release bolt 30 comprises a threaded portion 34 on which a running nut 12 is engaged. The release bolt housing 32 inhibits a rotatability of the running nut 12.

When the brake release bolt 30 is rotated via an operating section 18, the running nut 12 moves along the threaded portion 34 and thus axially along the release bolt 30. The running nut 12 is adapted to move the spring brake actuator piston 8 against a force of the actuator power spring 6. In other words, when the running nut 12 moves towards the actuator housing base 5, it forces the spring brake actuator piston 8 towards the actuator housing base 5, thereby compressing the actuator power spring 6. This, in consequence, releases the spring brake actuator 2.

The brake release mechanism 24 furthermore comprises an indicator device 22. The indicator device 22 comprises an indicator pin 26 which is accommodated in a receiving space 36 of the release bolt 30. The indicator pin 26 is movable within the receiving space 36 relative to the brake release bolt 30.

The indicator device 22 comprises a pin actuator 16 for moving the indicator pin 26 relative to the receiving space 36 along its longitudinal axis 28. The pin actuator 16 comprises a limiting element 40 which is connected to the indicator pin 26. The limiting element 40 extends substantially perpendicular to the longitudinal axis 28 of the indicator pin 26. The spring brake actuator 2 moreover comprises an internal breathing valve 14.

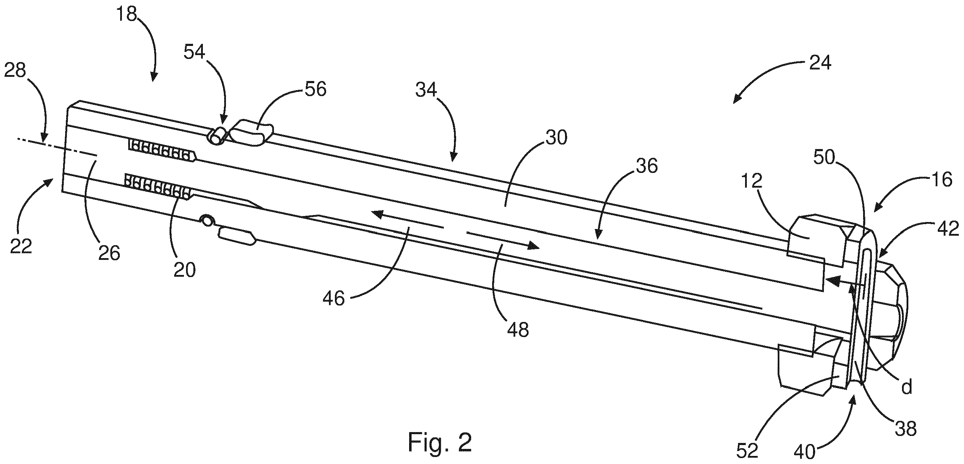

Fig. 2 shows a first embodiment of the brake release mechanism 24 comprising a brake release bolt 30. The brake release bolt 30 comprises the threaded portion 34 on which the running nut 12 is able to move axially along the brake release bolt 30. The pin actuator 38 comprises the limiting element 40 being connectable to the indicator pin 26. The release bolt 30 comprises a transverse guide opening 42 for loosely accommodating the limiting element 40 and limiting a motion distance d of the indicator pin 26 along the longitudinal axis 28. The transverse guide opening 42 is arranged perpendicular to the longitudinal axis 28 of the indicator pin 26. The transverse guide opening 42 extends entirely through the release bolt 30. The transverse guide opening 42 is arranged partially at the threaded portion 34 of the release bolt 30. Furthermore, the limiting element 40 comprises a pin 38.

The brake release bolt 30 furthermore comprises a spring element 20 forcing the indicator pin 26 in a first direction 46 along the longitudinal axis 28 towards the operating section 18. The limiting element 40 is configured to indirectly abut against the running nut 12 for moving the indicator pin 26 against a force of the spring element 20 in a second direction 48. The second direction 48 is opposite to the first direction 46. Between the running nut 12 and the limiting element 40, a spacing means 50 is arranged. The spacing means 50 decouples the limiting element 40 from the torque applied by the running nut 12. The spacing means 50 is configured as a plain washer 52. The brake release bolt 30 furthermore comprises a sealing 54 and a fitting piece 56 for fitting the brake release bolt 30 into the release bolt receiving space 36.

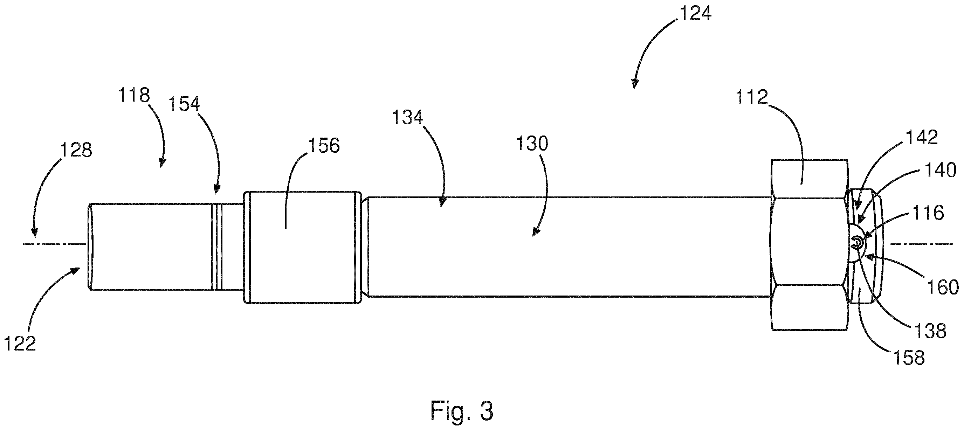

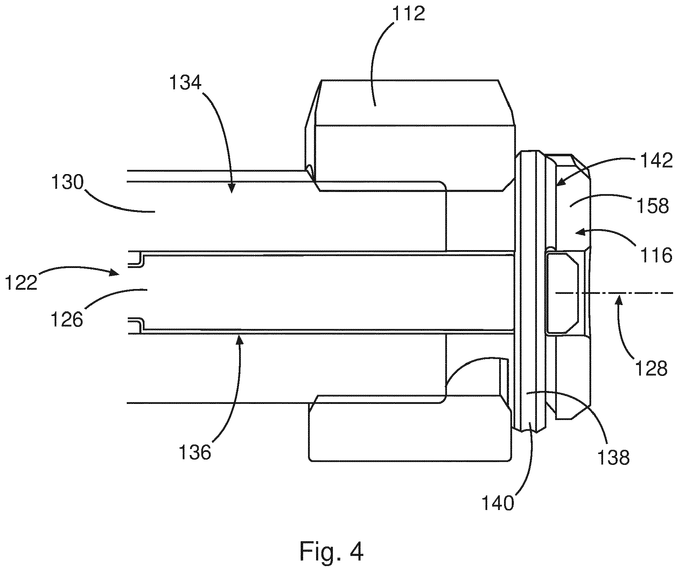

Fig. 3 and Fig. 4 show an alternative embodiment of the brake release mechanism 124. The brake release mechanism 124 comprises a brake release bolt 130 having a threaded portion 134 and an operating section 118 for operating the release bolt 130 when inserted into a spring brake actuator 2 (see Fig. 1).

A running nut 112 engages the threaded portion 134. The running nut 112 is adapted to axially travel along the threaded portion 134. The brake release mechanism 124 moreover comprises an indicator device 122 comprising an indicator pin 126. The indicator pin 126 has a longitudinal axis 128 and is at least partially accommodated in a receiving space 136 of the release bolt 130. The indicator device 122 further comprises a pin actuator 116 for moving the indicator pin 126 relative to the receiving space 136 along its longitudinal axis 128.

The pin actuator 138 comprises a limiting element 140 which is connected to the indicator pin 126. The limiting element 140 extends perpendicular to the longitudinal axis 128 of the indicator pin 126. The brake release bolt 130 comprises a transverse guide opening 142 for loosely accommodating the limiting element 140 and limiting a motion distance d of the indicator pin 126 along the longitudinal axis 128. The transverse guide opening 142 is arranged perpendicular to the longitudinal axis 128 of the indicator pin 126, wherein the transverse guide opening 142 extends entirely through the release bolt 130. The transverse guide opening 142 is partially arranged at the threaded portion 134 of the release bolt 130.

The limiting element 140 is configured as a pin 138, wherein the pin 138 is made of steel. The opening 142 is of a cylindrical shape 160. Furthermore, the brake release bolt 130 comprises an end portion 158 which is arranged on the opposite side of the operating section 118 at the brake release bolt 130. Also, the brake release bolt 130 comprises a sealing 154 and a fitting piece 156 for fitting the brake release bolt 130 relative to a release bolt housing 32 (see Fig. 1).

In contrast to the embodiment of the Figs. 1 and 2, the embodiment of Figs. 3 to 5 does not comprise a spacing means 50. Rather, the running nut 112 directly abuts against the limiting element 140.

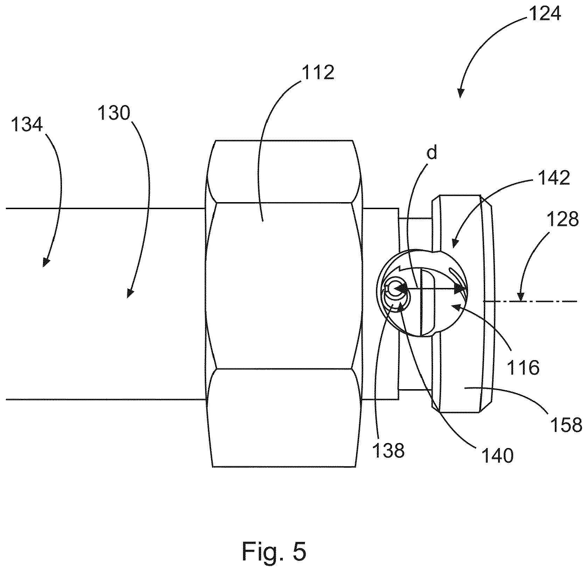

As can be seen from Fig. 5, the geometry of the transverse guide opening 142 limits the motion distance d of the pin 138. In the state shown in Fig. 5, the pin 138 is forced towards a left boundary (in the orientation of Fig. 5) of the transverse guide opening 142 by a spring element (not shown, see Figs. 1 and 2). When the running nut 112 travels towards the right side of Fig. 5, it abuts against the pin 138 and forces the pin 138 to the right, until its motion distance d is limited by the boundary of the transverse guide opening 142. In the state shown in Fig. 5, the indicator pin 126 is visible from outside the brake release mechanism 124 at the operating section 118. When the running nut 112 forces the pin 138 and thus the whole indicator pin 126 to the right, as shown in Fig. 5, the indicator pin 126 gets retracted into the brake release bolt 130. This state corresponds to the driving state of the spring brake actuator 2.

### List of references (Part of the description)

- 2: spring brake actuator
- 4: actuator housing
- 5: actuator housing base
- 6: actuator power spring
- 8: spring brake actuator piston
- 10: pressure chamber
- 11: rod
- 12: running nut
- 14: internal breathing valve
- 16: pin actuator
- 18: operating section
- 20: spring element
- 22: indicator device
- 24: brake release mechanism
- 26: indicator pin
- 28: longitudinal axis
- 30: brake release bolt
- 32: release bolt housing
- 34: threaded portion
- 36: release bolt receiving space
- 38: pin
- 40: limiting element
- 42: transverse guide opening
- 46: first direction
- 48: second direction
- 50: spacing means
- 52: plain washer
- 54: sealing
- 56: fitting piece
- 112: running nut
- 116: pin actuator
- 118: operating section
- 122: indicator device
- 124: brake release mechanism
- 126: indicator pin
- 128: longitudinal axis
- 130: brake release bolt
- 134: threaded portion
- 136: release bolt receiving space
- 138: pin
- 140: limiting element
- 142: transverse guide opening
- 154: sealing
- 156: fitting piece
- 158: end portion
- 160: cylindrical shape
- d: motion distance of the pin

## Claims

1. A brake release mechanism (24) for a spring brake actuator (2), in particular a parking or emergency spring brake actuator (2) for use in a commercial vehicle, said release mechanism (24) comprising:
- a brake release bolt (30, 130) having a threaded portion (34, 134) and an operating section (18, 118) for operating the release bolt (30, 130) when inserted into a spring brake actuator (2),
- a running nut (12, 112) engaging the threaded portion (34, 134), said running nut (12, 112) being adapted to axially travel along the threaded portion (34, 134) in order to move a spring brake actuator piston (8) against a force of an actuator power spring (6),
- an indicator device (22, 122) comprising an indicator pin (26, 126) having a longitudinal axis (28, 128) and being at least partially accommodated in a receiving space (36, 136) of the release bolt (30, 130),
wherein the indicator device (22, 122) further comprises a pin actuator (38, 138) that is configured to move the pin (26, 126) relative to the receiving space (36, 136) along its longitudinal axis (28, 128),
**characterized in that** the pin actuator (38, 138) comprises a limiting element (40, 140) that is connected to the indicator pin (26, 126), wherein the limiting element (40, 140) extends substantially perpendicularly to the longitudinal axis (28, 128) of the indicator pin (26, 126),
and **in that** a transverse guide opening (42, 142) is arranged in the release bolt (30, 130), the transverse guide opening (42, 142) being configured to movably accommodate the limiting element (40, 140) and the movement to define a motion distance (d) of the indicator pin (26, 126) along the longitudinal axis (28, 128) along which the limiting element moves inside the transverse guide opening.

2. The release mechanism (24, 124) according to claim 1,
**characterized in that** the transverse guide opening (42, 142) is arranged perpendicular to the longitudinal axis (28, 128) of the indicator pin (26, 126).

3. The release mechanism (24) according to claim 1 or 2,
**characterized in that** the transverse guide opening (42, 142) extends entirely or partially, preferably halfway, through the release bolt (30, 130).

4. The release mechanism (24, 124) according to any of the preceding claims,
**characterized in that** the transverse guide opening (42, 142) is arranged at least partially at the threaded portion (34, 134) of the release bolt (30, 130).

5. The release mechanism (24, 124) according to any of the preceding claims,
characterized the motion distance (d) extends from 2 mm to 10 mm, preferably 4 mm to 6 mm.

6. The release mechanism (24, 124) according to any of the preceding claims,
**characterized in that** the limiting element (40, 140) comprises or is configured as at least one of the following:
- pin (38, 138),
- bolt,
- screw.

7. The release mechanism (24, 124) according to claim 6,
wherein the limiting element (40, 140) comprises at least one of the following shapes:
- coiled,
- knurled,
- solid.

8. The release mechanism (24, 124) according to any of the preceding claims,
wherein the limiting element (40, 140) comprises or is made of at least one of the following materials:
- metal, in particular steel,
- plastic,
- composite, in particular glass fiber reinforced plastic and/or carbon fiber reinforced plastic.

9. The release mechanism (24, 124) according to any of the preceding claims,
wherein the opening (42, 142) comprises at least one of the following shapes:
- cylindrical (160),
- elliptical,
- rectangular.

10. The release mechanism (24, 124) according to any of the preceding claims,
wherein the indicator pin (26, 126) comprises or is made of at least one of the following materials:
- metal, in particular steel,
- plastic,
- composite, in particular glass fiber reinforced plastic and/or carbon fiber reinforced plastic.

11. The release mechanism (24) according to any of the preceding claims, **characterized in that** the brake release bolt (30) comprises a spring element (20) forcing the indicator pin (26) in a first direction (46) along the longitudinal axis (28) towards the operating section (18).

12. The release mechanism (24) according to any of the preceding claims, **characterized in that** the limiting element (40) is configured to directly or indirectly abut against the running nut (12) for moving the indicator pin (26) against a force of the spring element (20) in a second direction (48), the second direction (48) being opposite to the first direction (46).

13. The release mechanism (24) according to any of the preceding claims, wherein a spacing means (50) is arranged between the running nut (12) and the limiting element (40) for decoupling the limiting element (40) from a torque applied by the running nut (12).

14. The release mechanism (24) according to claim 13,
wherein the spacing means (50) comprises at least one of the following:
- plain washer (52),
- spring washer,
- bushing.

15. A spring brake actuator (2), in particular a parking or emergency spring brake actuator (2) for use in a commercial vehicle, said actuator comprising:
- an actuator housing (4) having an actuator housing base (5),
- a spring brake actuator piston (8) located in said actuator housing (4) for applying a braking force,
- an actuator power spring (6) located between the actuator housing base (5) and the spring brake actuator piston (8), said actuator power spring (6) being effective to push the spring brake actuator piston (8) away from the base (5), **characterized by** a brake release mechanism (24, 124) according to any of claims 1-14.

## Patentansprüche

1. Bremslösemechanismus (24) für einen Federspeicherbremszylinder (2), insbesondere einen Park- oder Not-Federspeicherbremszylinder (2) zur Verwendung in einem Nutzfahrzeug, der Lösemechanismus (24) umfassend:
- einen Bremslösebolzen (30, 130), der einen Gewindeabschnitt (34, 134) und einen Betriebsbereich (18) zum Betreiben des Lösebolzens (30, 130) aufweist, wenn er in einen Federspeicherbremszylinder (2) eingesetzt ist,
- eine Laufmutter (12, 112), die den Gewindeabschnitt (34, 134) in Eingriff nimmt, wobei die Laufmutter (12, 112) angepasst ist, um sich axial entlang des Gewindeabschnitts (34, 134) zu bewegen, um einen Federspeicherbremszylinderkolben (8) gegen eine Kraft einer Zylindertriebfeder (6) zu bewegen,
- eine Indikatorvorrichtung (22,122), umfassend einen Indikatorstift (26,126), der eine Längsachse (28,128) aufweist und mindestens teilweise in einem Aufnahmeraum (36,136) des Lösebolzens (30,130) untergebracht ist,
wobei die Indikatorvorrichtung (22,122) ferner einen Stiftaktuator (38,138) umfasst, der konfiguriert ist, um den Stift (26,126) relativ zu dem Aufnahmeraum (36,136) entlang seiner Längsachse (28,128) zu bewegen,
**dadurch gekennzeichnet, dass** der Stiftaktuator (38,138) ein Begrenzungselement (40,140) umfasst, das mit dem Indikatorstift (26,126) verbunden ist, wobei sich das Begrenzungselement (40,140) im Wesentlichen senkrecht zu der Längsachse (28,128) des Indikatorstifts (26,126) erstreckt,
und dadurch, dass eine Querführungsöffnung (42,142) in dem Lösebolzen (30,130) angeordnet ist, wobei die Querführungsöffnung (42,142) konfiguriert ist, um das Begrenzungselement (40,140) und die Bewegung beweglich unterzubringen, um eine Bewegungsstrecke (d) des Indikatorstifts (26,126) entlang der Längsachse (28,128) zu definieren, entlang der sich das Begrenzungselement innerhalb der Querführungsöffnung bewegt.

2. Lösemechanismus (24,124) nach Anspruch 1,
**dadurch gekennzeichnet, dass** die Querführungsöffnung (42,142) senkrecht zur Längsachse (28,128) des Indikatorstifts (26,126) angeordnet ist.

3. Lösemechanismus (24) nach Anspruch 1 oder 2,
**dadurch gekennzeichnet, dass** sich die Querführungsöffnung (42,142) vollständig oder teilweise, vorzugsweise zur Hälfte, durch den Lösebolzen (30,130) erstreckt.

4. Lösemechanismus (24,124) nach einem der vorstehenden Ansprüche, **dadurch gekennzeichnet, dass** die Querführungsöffnung (42,142) mindestens teilweise am Gewindeabschnitt (34,134) des Lösebolzens (30,130) angeordnet ist.

5. Lösemechanismus (24,124) nach einem der vorstehenden Ansprüche, **dadurch gekennzeichnet, dass** die Bewegungsstrecke (d) sich von 2 mm bis 10 mm, vorzugsweise 4 mm bis 6 mm, erstreckt.

6. Lösemechanismus (24,124) nach einem der vorstehenden Ansprüche, **dadurch gekennzeichnet, dass** das Begrenzungselement (40,140) mindestens eines der Folgenden umfasst oder konfiguriert ist als:
- Stift (38,138),
- Bolzen,
- Schraube.

7. Lösemechanismus (24,124) nach Anspruch 6, wobei das Begrenzungselement (40,140) mindestens eine der folgenden Formen umfasst:
- gewickelt,
- gerändelt,
- massiv.

8. Lösemechanismus (24,124) nach einem der vorstehenden Ansprüche, wobei das Begrenzungselement (40,140) mindestens eines der folgenden Materialien umfasst oder daraus hergestellt ist:
- Metall, insbesondere Stahl,
- Kunststoff,
- Verbundwerkstoff, insbesondere glasfaserverstärkter Kunststoff und/oder kohlenstofffaserverstärkter Kunststoff.

9. Lösemechanismus (24,124) nach einem der vorstehenden Ansprüche, wobei die Öffnung (42,142) mindestens eine der folgenden Formen umfasst:
- zylindrisch (160),
- elliptisch,
- rechteckig.

10. Lösemechanismus (24,124) nach einem der vorstehenden Ansprüche, wobei der Indikatorstift (26,126) mindestens eines der folgenden Materialien umfasst oder daraus hergestellt ist:
- Metall, insbesondere Stahl,
- Kunststoff,
- Verbundwerkstoff, insbesondere glasfaserverstärkter Kunststoff und/oder kohlenstofffaserverstärkter Kunststoff.

11. Lösemechanismus (24) nach einem der vorstehenden Ansprüche, **dadurch gekennzeichnet, dass** der Bremslösebolzen (30) ein Federelement (20) umfasst, das den Indikatorstift (26) in eine erste Richtung (46) entlang der Längsachse (28) zur Richtung des Betriebsbereichs (18) drückt.

12. Lösemechanismus (24) nach einem der vorstehenden Ansprüche, **dadurch gekennzeichnet, dass** das Begrenzungselement (40) konfiguriert ist, um direkt oder indirekt an der Laufmutter (12) anzuliegen, zum Bewegen des Indikatorstifts (26) gegen eine Kraft des Federelements (20) in eine zweite Richtung (48), wobei die zweite Richtung (48) der ersten Richtung (46) entgegengesetzt ist.

13. Lösemechanismus (24) nach einem der vorstehenden Ansprüche, wobei ein Abstandsmittel (50) zwischen der Laufmutter (12) und dem Begrenzungselement (40) zum Entkoppeln des Begrenzungselements (40) von einem durch die Laufmutter (12) ausgeübten Drehmoment angeordnet ist.

14. Lösemechanismus (24) nach Anspruch 13, wobei das Abstandsmittel (50) mindestens eine der folgenden umfasst:
- Unterlegscheibe (52),
- Federscheibe,
- Buchse.

15. Federspeicherbremszylinder (2), insbesondere ein Park- oder Not-Federspeicherbremszylinder (2) zur Verwendung in einem Nutzfahrzeug, der Zylinder (2) umfassend:
- ein Zylindergehäuse (4), das eine Zylindergehäusebasis (5) aufweist,
- einen in dem Zylindergehäuse (4) befindlichen Federspeicherbremszylinderkolben (8) zum Ausüben einer Bremskraft,
- eine Zylindertriebfeder (6), die sich zwischen der Zylindergehäusebasis (5) und dem Federspeicherbremszylinderkolben (8) befindet, wobei die Zylindertriebfeder (6) wirksam ist, um den Federspeicherbremszylinderkolben (8) von der Basis (5) weg zu drücken, **gekennzeichnet durch** einen Bremslösemechanismus (24, 124) nach einem der Ansprüche 1 bis 14.

## Revendications

1. Mécanisme de desserrage de frein (24) pour un cylindre de frein à ressort (2), en particulier un cylindre de frein à ressort de stationnement ou d'urgence (2) pour une utilisation dans un véhicule utilitaire, ledit mécanisme de desserrage (24) comprenant :
- un boulon de desserrage de frein (30, 130) ayant une partie filetée (34, 134) et une section d'actionnement (18, 118) pour actionner le boulon de desserrage (30, 130) lorsqu'il est inséré dans un cylindre de frein à ressort (2),
- un écrou mobile (12, 112) venant en prise avec la partie filetée (34, 134), ledit écrou mobile (12, 112) étant adapté à un déplacement axial le long de la partie filetée (34, 134) afin de déplacer un piston de cylindre de frein à ressort (8) contre une force d'un ressort moteur de cylindre (6),
- un dispositif indicateur (22, 122) comprenant une broche indicatrice (26, 126) ayant un axe longitudinal (28, 128) et étant au moins partiellement logée dans un espace de réception (36, 136) du boulon de desserrage (30, 130),
dans lequel le dispositif indicateur (22, 122) comprend en outre un actionneur de broche (38, 138) qui est configuré pour déplacer la broche (26, 126) par rapport à l'espace de réception (36, 136) le long de son axe longitudinal (28, 128),
**caractérisé en ce que** l'actionneur de broche (38, 138) comprend un élément de limitation (40, 140) qui est relié à la broche indicatrice (26, 126), dans lequel l'élément de limitation (40, 140) s'étend sensiblement perpendiculairement à l'axe longitudinal (28, 128) de la broche indicatrice (26, 126),
et **en ce qu'**une ouverture de guidage transversale (42, 142) est agencée dans le boulon de desserrage (30, 130), l'ouverture de guidage transversale (42, 142) étant configurée pour recevoir de manière mobile l'élément de limitation (40, 140) et le mouvement pour définir une distance de mouvement (d) de la broche indicatrice (26, 126) le long de l'axe longitudinal (28, 128) le long duquel l'élément de limitation se déplace au sein de l'ouverture de guidage transversale.

2. Mécanisme de desserrage (24, 124) selon la revendication 1, **caractérisé en ce que** l'ouverture de guidage transversale (42, 142) est agencée perpendiculairement à l'axe longitudinal (28, 128) de la broche indicatrice (26, 126).

3. Mécanisme de desserrage (24) selon la revendication 1 ou 2, **caractérisé en ce que** l'ouverture de guidage transversale (42, 142) s'étend entièrement ou partiellement, de préférence à mi-chemin, à travers le boulon de desserrage (30, 130).

4. Mécanisme de desserrage (24, 124) selon l'une quelconque des revendications précédentes, **caractérisé en ce que** l'ouverture de guidage transversale (42, 142) est agencée au moins partiellement au niveau de la partie filetée (34, 134) du boulon de desserrage (30, 130).

5. Mécanisme de desserrage (24, 124) selon l'une quelconque des revendications précédentes, **caractérisé en ce que** la distance de mouvement (d) s'étend de 2 mm à 10 mm, de préférence de 4 mm à 6 mm.

6. Mécanisme de desserrage (24, 124) selon l'une quelconque des revendications précédentes, **caractérisé en ce que** l'élément de limitation (40, 140) comprend ou est configuré comme au moins l'un des éléments suivants :
- une broche (38, 138),
- un boulon,
- une vis.

7. Mécanisme de desserrage (24, 124) selon la revendication 6, dans lequel l'élément de limitation (40, 140) comprend au moins l'une des formes suivantes :
- enroulée,
- moletée,
- pleine.

8. Mécanisme de desserrage (24, 124) selon l'une quelconque des revendications précédentes, dans lequel l'élément de limitation (40, 140) comprend ou est constitué d'au moins l'un des matériaux suivants :
- métal, en particulier acier,
- plastique,
- composite, en particulier plastique renforcé de fibres de verre et/ou plastique renforcé de fibres de carbone.

9. Mécanisme de desserrage (24, 124) selon l'une quelconque des revendications précédentes, dans lequel l'ouverture (42, 142) comprend au moins l'une des formes suivantes :
- cylindrique (160),
- elliptique,
- rectangulaire.

10. Mécanisme de desserrage (24, 124) selon l'une quelconque des revendications précédentes, dans lequel la broche indicatrice (26, 126) comprend ou est constituée d'au moins l'un des matériaux suivants :
- métal, en particulier acier,
- plastique,
- composite, en particulier plastique renforcé de fibres de verre et/ou plastique renforcé de fibres de carbone.

11. Mécanisme de desserrage (24) selon l'une quelconque des revendications précédentes, **caractérisé en ce que** le boulon de desserrage de frein (30) comprend un élément de ressort (20) forçant la broche indicatrice (26) dans une première direction (46) le long de l'axe longitudinal (28) vers la section d'actionnement (18).

12. Mécanisme de desserrage (24) selon l'une quelconque des revendications précédentes, **caractérisé en ce que** l'élément de limitation (40) est configuré pour venir directement ou indirectement en butée contre l'écrou mobile (12) pour déplacer la broche indicatrice (26) contre une force de l'élément de ressort (20) dans une seconde direction (48), la seconde direction (48) étant opposée à la première direction (46).

13. Mécanisme de desserrage (24) selon l'une quelconque des revendications précédentes, dans lequel un moyen d'espacement (50) est agencé entre l'écrou mobile (12) et l'élément de limitation (40) pour le découplage de l'élément de limitation (40) d'un couple appliqué par l'écrou mobile (12).

14. Mécanisme de desserrage (24) selon la revendication 13, dans lequel le moyen d'espacement (50) comprend au moins l'un des éléments suivants :
- une rondelle plate (52),
- un rondelle élastique,
- une douille.

15. Cylindre de frein à ressort (2), en particulier un cylindre de frein à ressort de stationnement ou d'urgence (2) pour une utilisation dans un véhicule utilitaire, ledit cylindre comprenant :
- un logement de cylindre (4) ayant une base de logement de cylindre (5),
- un piston de cylindre de frein à ressort (8) situé dans ledit logement de cylindre (4) pour appliquer une force de freinage,
- un ressort moteur de cylindre (6) situé entre la base de logement de cylindre (5) et le piston de cylindre de frein à ressort (8), ledit ressort moteur de cylindre (6) étant efficace pour pousser le piston de cylindre de frein à ressort (8) loin de la base (5), **caractérisé par** un mécanisme de desserrage de frein (24, 124) selon l'une quelconque des revendications 1 à 14.
